# EUROPEAN PATENT APPLICATION

(11) **EP 4 541 204 A1**
(43) Date of publication of application: **23.04.2025**
(21) Application number: 24207219.7
(22) Date of filing: 17.10.2024
(51) Int. Cl.: A23K 10/37, A23K 20/10, A23K 20/142, A23K 20/158, A23K 20/163, A23K 50/10

(54) **METHOD FOR PRODUCING A METHANE REDUCING RATION FOR CATTLE, AS WELL AS THE RATION PRODUCED**

(30) Priority: 17.10.2023 BE 202305860
(71) Applicant: Trotec NV, 8630 Veurne (BE)
(72) Inventor: Forrez, Krist, 8630 Veurne (BE); Pauwelyn, Sigrid, 8630 Veurne (BE)
(74) Representative: Brantsandpatents bv

(57) **Abstract**

The current invention relates to a method for producing a ration for methane reduction in cattle, comprising: providing at least a first type of organic side stream and a second type of organic side stream, wherein each organic side stream has a meat content of at most 0.001 wt%, wherein the first type of organic side stream comprises starch-rich by-products with a starch content of at least 40 wt%; wherein the second type of organic side stream includes fat-rich by-products containing a fat content of at least 10 wt%; reducing said organic side streams; dosing the reduced organic side streams; and drying and mixing supplied organic side streams. The invention also relates to a methane-reducing ration for cattle produced by the first aspect of the invention. Finally, the invention relates to a use of the ration according to the first or second aspect of the invention as a methane-reducing ration for cattle.

## Description

### TECHNICAL FIELD

The invention relates to a method for producing a methane-reducing ration for cattle.

In a second aspect, the invention also relates to a ration for cattle, produced by the method of the first aspect of the invention.

In a third aspect, the invention also relates to a use of the ration as a methane-reducing ration for cattle.

### PRIOR ART

Every year, one third of food is wasted, with consumers accounting for the largest share. Together with the food industry and retail and wholesale, this is responsible for almost a quarter of food waste. Currently, at most 80% to 90% of this is used as feed for fermentation plants, composting or animal feed.

Food waste such as food remains from families, restaurants, and bakeries is considered low-grade waste that may not result in economic products when recycled. Therefore, the food waste is generally utilized by decomposing the food waste to obtain organic products such as manure and biogas. The problem with such applications is that they do not utilize the nutritional value of the waste food. To utilize the nutritional value of the food waste, the food waste is used as feed for cattle. Here, close attention must be paid to the composition of the feed and how it is produced, because the welfare of the cattle is closely related to their diet. After all, a suitable feed composition for cattle ensures the supply of the necessary nutrients. In addition, when developing rations for cattle, great attention must be paid to the methane production of cattle. The problem with methane in cattle is that it is a potentially harmful greenhouse gas. Cattle produce methane during their digestion and this gas is emitted into the atmosphere. Methane has a greenhouse effect that is stronger than CO₂ and is therefore a major contributor to global warming. Methane emissions from cattle are a significant contributor to global greenhouse gas emissions and are often cited as a major driver of climate change.

In the current prior art, various feeds and methods are known to produce feeds that have a methane-reducing effect, which partly make use of the processing of food waste. First, CN110037178A describes a feed for reducing methane emissions. The feed includes guinea pig grass, maize silage and concentrate feed supplement for livestock. Next, EP4000411A1 describes a method for reducing methane production by dairy ruminants, comprising feeding an ensiled feed composition. It also refers to an ensiled food composition. Finally, US2021077555A1 also describes a method for reducing total gas production and/or methane production in a ruminant.

CN109907166 describes a process for manufacturing animal feed, but with a composition inadequate for the desired purposes. Thus, the document describes a composition with a starch content between 2 and 3 wt%, protein content between 2 and 3 wt% (the "young stem and leaf" typically contains about 20% protein, and occurs in a ratio of 10-15 parts per 100 parts). The sugar content is higher than 1% according to examples 6. These values are insufficient to achieve the desired characteristics.

The problem with these current feeds and methods is that they mainly involve and process pure raw materials, which is detrimental to the affordability and sustainability of cattle feed production. This is because these raw materials usually have to be produced on a large scale, which leads to higher production costs and environmental impact. Furthermore, the dependence on these pure raw materials can lead to a decrease in biodiversity and dependence on specific raw materials and regions. It is therefore important to develop a ration that is less dependent on pure raw materials and that is based on local, sustainable sources and still meets the needs of the cattle.

A known prior art solution for this is the mixing of low- and high-quality side streams with pure raw materials. However, a problem with such known methods is the formation of a very inconsistent product result, especially when using typical batch processing techniques. Consequently, the different streams cannot be mixed into a uniform mixture. An analysis carried out on the resulting product will therefore produce very divergent results. However, one problem associated with processing food waste into animal feed is that inconsistent products are created when typical batch processing is used. That is, in batch processing, smaller amounts of food waste are processed at any given time. This prevents the food waste from being mixed into a uniform mixture. As a result, an analysis of the final product formed on one day may differ significantly from a product formed on another day or even from a product formed in a different batch on the same day.

Another problem when processing side streams is that they typically have a high moisture and water content. To minimize the amount of moisture and water in the end product, such products are often mixed with solid and/or dry side streams. Alternatively, or in addition to the above, various drying techniques can also be used. For example, US5976 594 describes such drying of residual streams. A major disadvantage of such drying techniques is the frequent ignition of the by-products to be dried. This not only creates a very dangerous situation for personnel, but can also cause substantial material damage to, among other things, the drying installation.

There is therefore a need for an effective use of the waste feed to obtain a methane-reducing feed for cattle and a method for obtaining said feed from side streams. In particular, there is a need for such a method for obtaining such dry feed product safely, i.e., without ignition, but maintaining good nutritional value. The present invention aims to at least find a solution to some of the above-mentioned problems or disadvantages.

### SUMMARY OF THE INVENTION

In a first aspect, the present invention relates to a method according to claim 1.

A higher-quality use of side streams results in less waste, lower costs, as well as higher returns for companies, which also significantly improves their competitive position. Various organic side streams from food companies will be processed into rations for cattle. This keeps food within the food chain and prevents waste. To utilize the nutritional value of food waste, food waste is used as ration. Here, close attention is paid to the composition of the feed and how it is produced, because the welfare of cattle is closely related to their diet. After all, a suitable feed composition for cattle ensures the supply of the necessary nutrients.

Preferred embodiments of the method are set out in claims 2-9.

The method involves carefully composing and producing the ration based on a plurality of different types of side streams to ensure uniform quality and composition. This ensures that the ration for cattle is consistent and can promote their long-term health. The method of processing various organic side streams from food companies into cattle rations not only has advantages for reducing food waste and optimizing nutritional value, but also for workplace safety. The present invention is also advantageous due to a safe drying technique which in particular prevents ignition of the side streams. By reducing the particle size, the drying process is distributed more evenly and the chance of hotspots is reduced, making the drying process safer. This not only reduces the risk of fire hazards, but also extends the life of the equipment and reduces production errors. Furthermore, the present invention is advantageous due to a flexible dosing device that reliably and consistently delivers a dry, homogeneous ration. A homogeneous mixture of the reduced side streams ensures safer and more efficient processing and contributes to an optimal nutritional value of the ration. The dosing device also allows for customized production, which means that side streams can be delivered as required. This guarantees uniform quality and composition.

In a second aspect, the present invention relates to a ration according to claim 10.

Preferred embodiments of the ration are described in dependent conclusions 11 to 14.

In addition to the benefits in terms of food waste and safety, the use of organic side streams in cattle rations also has positive effects on the environment. By efficiently using these side streams, methane emissions from cattle are reduced, as the feed composition is better adapted to their digestive system. This also has benefits for the climate goals of companies and governments, as methane is a potent greenhouse gas. In addition, a more balanced feed composition will lead to increased milk production and weight gain of the cattle, which also contributes to more efficient and sustainable production. By combining these benefits with the already mentioned advantages of safety and cost savings, this is an optimal and sustainable ration for cattle.

In a third aspect, the present invention relates to a use according to claim 15.

This use results in high-quality reuse of at least part of the mentioned side streams. A higher-quality utilization of side streams leads to less waste, lower costs, as well as higher returns for companies, wherein their competitive position also improves considerably. The ration will meet the nutritional needs of cattle and support their health. The need to separately purchase and process several ingredients, and pure raw materials in particular, can also be reduced, which can reduce production costs.

The methane-reducing ration for cattle is designed to reduce methane emissions from the animals. Methane is a powerful greenhouse gas that contributes to climate change. The use of a methane-reducing ration will result in reduced methane emissions from the animals, which will contribute to efforts to reduce global warming and mitigate climate change. Methane is a byproduct of cattle digestion and the loss of methane also means the loss of energy. A methane-reducing ration will therefore improve the animals' digestion and increase their feed utilization efficiency, allowing them to extract more energy from the feed and require less ration to produce the same amount. A methane-reducing ration will also contribute to the health of the animals. Some of the ingredients in the ration, such as tannins and oils, have antibacterial and antiparasitic properties, which will help improve the health of the animals.

Finally, the use of a methane-reducing ration will also lead to new market opportunities for meat and milk from cattle that are produced in a sustainable manner and contribute to the reduction of greenhouse gas emissions. This will contribute to the economic sustainability of the agricultural sector.

Further advantages, embodiments and preferred embodiments of the invention are discussed below in the detailed description.

### DETAILED DESCRIPTION

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

When the term "around" or "about" is used in this document with a measurable quantity, a parameter, a duration or moment, and the like, then variations are meant of approx. 20% or less, preferably approx. 10% or less, more preferably approx. 5% or less, even more preferably approx. 1% or less, and even more preferably approx. 0.1% or less than and of the quoted value, insofar as such variations are applicable in the described invention. However, it must be understood that the value of a quantity used where the term "about" or "around" is used, is itself specifically disclosed.

The terms "comprise," "comprising," "consist of," "consisting of," "provided with," "include," "including," "contain," "containing," are synonyms and are inclusive or open terms that indicate the presence of what follows, and which do not exclude or prevent the presence of other components, characteristics, elements, members, steps, as known from or disclosed in the prior art.

The term "cattle" as used herein refers to all animals of the cow group including cows, bulls, calves, and so on.

Quoting numeric intervals by the endpoints includes all integers, fractions, and/or real numbers between the endpoints, including those endpoints.

The terms "nutrients" and "nutritive substances" are synonymous and refer to substances used by a bovine animal to survive, grow and reproduce. They play a crucial role in various processes, such as tissue assimilation and energy supply in cattle. The requirements for nutrient intake are different for each bovine animal.

"Wt%" as used herein refers to weight percentage, a unit of measure indicating what portion of a mixture or solution consists of a particular substance, expressed as a percentage of the total weight.

In a first aspect, the invention relates to a method for producing a methane-reducing ration for cattle.

Preferably, the method comprises the steps of:
a. providing at least a first type of organic side stream and a second type of organic side stream, wherein each organic side stream has a maximum meat content of 0.001 wt% and wherein:
   i. the first type of organic side stream comprises starch-rich by-products, wherein the first type of organic side stream comprises a starch content of at least 40 wt%;
   ii. the second type of organic side stream includes fat-rich by-products, wherein the second type of organic by-flow has a fat content of at least 10 wt%;
b. the reduction of said organic side streams, thereby obtaining reduced organic side streams, wherein the reduced organic side streams have a homogeneous particle size of at least 0.5 cm and at most 10 cm;
c. the drying of one or more of the reduced organic side streams, wherein drying takes place in a rotary drum dryer and/or a belt dryer, wherein the drying of the reduced organic side streams takes place in the rotary drum dryer for a residence time of at least 10 minutes;
d. mixing and dosing the reduced organic side streams, thereby obtaining a homogeneous feed product with a fat content of at least 10 wt% and a starch content of at least 40 wt%.

In a second aspect, the invention relates to a methane-reducing ration for cattle, comprising a fat content of at least 10 wt%, a starch content of at least 40 wt%, a protein content of at least 10 wt%, a sugar content of at least 12% and a crude fiber content of at least 3 wt% and preferably obtained according to the method according to the first aspect of the invention.

In a third aspect, the invention relates to a use of the ration according to the first or second aspect of the invention as a methane-reducing ration for cattle.

A person of ordinary skill in the art will appreciate that the method according to a first aspect of the invention can be used to obtain a ration according to a second aspect of the invention. Furthermore, a person of ordinary skill in the art will also appreciate that the ration according to the first or second aspect of the invention can be used as a methane-reducing ration for cattle. In what follows, the three aspects of the present invention are therefore treated together. Furthermore, each feature described above as well as below, may relate to any of the three aspects, even if the feature is described in conjunction with a specific aspect of the present invention.

The terms "ration," "food," "feed" and "fodder" are synonyms and refer to an amount of feed provided to an animal of the bovine family. The ration can consist of different types of feed, such as grass, hay, corn, soy, minerals and vitamins, and is adapted to the specific nutritional needs of the cattle based on factors such as age, weight, breed and activity. The term ration is particularly widely used in livestock farming, where a well-balanced ration is of great importance for the health and performance of the cattle.

In a preferred embodiment, at least a first type of organic side stream and a second type of organic side stream are provided in a first step of the method.

The present invention focuses on processing a plurality of organic side streams to obtain a ration. In particular, the organic side streams mainly originate from the food industry and/or the feed industry. More specifically, the aforementioned plurality of organic side streams mainly originate from the food industry.

"Side stream," as used herein, refers to a term known in the art, also known as "residual stream" or "waste stream," which designates a composition comprising products resulting from a specific stage of a production and/or processing chain. "Organic side stream" as used herein refers to a term known in the art indicating a side stream consisting substantially of substances that are biological in origin.

"Food industry," as used herein, refers to a term known in the art, also known as "food processing industry," which designates companies that process raw materials, including agricultural products, into food or foodstuffs on an industrial scale. "Feed industry" as used herein refers to a term known in the art that designates companies that process raw materials, including agricultural products, into feed on an industrial scale.

Preferably, the plurality of organic side streams are primarily feed and/or food. Preferably, the plurality of organic side streams are primarily food. In accordance with the above definitions, food and feed side streams preferably refer to one or more of fruit and vegetable residues; cocoa, cocoa butter and fats derived from them; soy and products derived therefrom; stimulants and luxury foods *[in Dutch: genotsmiddelen]* such as coffee, soft drinks, cookies and chips; dairy products and products derived therefrom; flour and products derived therefrom; dough-based products *[in Dutch: deegwaren]* and products derived therefrom; flower bulbs; etc.

In order to obtain a ration in a continuous manner, various organic side streams, originating from, for example, different food and feed companies, must be combined. Preferably, the plurality of organic side streams comprise two or more of fruit and vegetable residues; cocoa, cocoa butter and fats derived from them; soy and products derived therefrom; stimulants and luxury foods *[in Dutch: genotsmiddelen]* such as coffee, soft drinks, cookies and chips; dairy products and products derived therefrom; flour and products derived therefrom; dough-based products *[in Dutch: deegwaren]* and products derived therefrom; flower bulbs. Consequently, at least two of the plurality of organic side streams have different average particle sizes. More preferably, at least one of the at least two of the plurality of organic side streams comprises an average particle size greater than the predetermined particle size limit value.

The ration obtained according to the present invention is preferably suitable for use as methane-reducing feed for cattle. Such high-quality use of organic side streams results in less waste, lower costs, as well as higher returns for companies, which also significantly improves their competitive position.

Preferably, the first type of organic side stream comprises starch-rich by-products with a starch content of at least 40 wt%, preferably at least 41 wt%, preferably at least 42 wt%, preferably at least 43 wt%, preferably at least 44 wt%, preferably at least 45 wt%, preferably at least 46 wt%, preferably at least 47 wt%, preferably at least 48 wt%, preferably at least 49 wt%, preferably at least 50 wt%, preferably at least 55 wt%, preferably at least 60 wt%. Starch is an important source of energy in the cattle ration. Cattle are ruminants and therefore have a complex digestive system adapted to digest high-fiber diets. This system includes several compartments, including the rumen, where microorganisms help break down fiber into volatile fatty acids that serve as an energy source. However, starch is a source of rapidly available energy that is digested and absorbed in the small intestine of the bovine animal. This can be useful at certain stages in the cattle life cycle, such as during growth or lactation, when cattle require additional energy. A ration with a high starch content can therefore help to meet the energy needs of the bovine animal. However, it is important to limit cattle's starch intake and balance it well with other nutrients, as too much starch can lead to digestive problems, such as rumen acidosis, which can affect cattle health and performance.

It should be noted that when drying side streams with a high starch content, such as grains, vegetables and fruits, starch is lost to a greater or lesser extent. During drying, the moisture content of the product is reduced, which extends its shelf life and reduces its weight. However, the moisture that evaporates can also carry nutrients with it, including starch. Starch is sensitive to heat and oxidation, and tends to break down during the drying process. For example, when drying grains such as corn, up to 20% of the starch can be lost. In fruits and vegetables, starch loss can depend on factors such as the type of fruit or vegetable, the drying method and temperature. In general, the higher the drying temperature, the greater the loss of nutrients. It is therefore important to take into account the loss of nutrients when drying the side streams, which means that the side streams must contain a higher starch content in view of the target starch content in the final ration.

Preferably, the second type of organic side stream comprises fat-rich by-products with a fat content of at least 10 wt%, preferably at least 11 wt%, preferably at least 11 wt%, preferably at least 12 wt%, preferably at least 13 wt%, preferably at least 14 wt%, preferably at least 15 wt%, preferably at least 16 wt%, preferably at least 17 wt%, preferably at least 18 wt%, preferably at least 19 wt%, preferably at least 20 wt%, preferably at least 25 wt%, preferably at least 30 wt%, preferably at least 35 wt%.

Fat is an important part of the cattle ration. It has several functions, first of all, fat provides more than twice as much energy per gram than carbohydrates and proteins. It is therefore an important source of energy for cattle. Fat can contribute to the taste and texture of the feed, making cattle more likely to accept the feed and eat it. A small amount of fat can improve the digestibility of nutrients in the diet, as it can aid in the breakdown and absorption of nutrients. Finally, adding a small amount of healthy fats, such as omega-3 fatty acids, will contribute to better cattle health, including improving skin, coat, immune system and fertility. Suggested fat percentages by weight provide a balanced fat content in the cattle ration, ensuring it provides sufficient energy and nutrients, while not being too high to avoid health issues such as obesity and digestive problems.

It should be noted that when drying fatty products, some fat is lost. This depends on several factors, such as the temperature and duration of the drying process, the composition of the product and the original amount of fat in the product. When drying foods, warm air is usually used to evaporate moisture and dry the product. At higher temperatures, the fat in the product can melt and then evaporate, which can cause fat loss. This is especially the case in side streams with a high fat content, such as nuts and seeds. To reduce fat loss during drying of products, alternative strategies can be applied, such as lowering the drying temperature, shortening the drying time, adding extra fat to the product, or protecting the product against oxidation by, for example, adding antioxidants. In general, it is important to consider possible losses of nutrients, including fat, when drying foods. This can be taken into account in the design of the drying process and in the selection of the most suitable drying method to obtain the desired ration quality.

A ration for cattle should contain no or as few meat-rich products as possible due to the risk of transmitting animal diseases. Cattle are ruminants and have a sensitive digestive system adapted to digesting plant material such as grass, hay and grains. When cattle eat meat, they can be exposed to bacteria and pathogens that may be present in the meat. In addition, feeding meat to ruminants, including cattle, can contribute to the spread of diseases such as Bovine Spongiform Encephalopathy (BSE) or mad cow disease. This disease is caused by an abnormal protein in the nervous system of cattle, which can be transmitted by feeding contaminated meat meal to ruminants. To protect the health of cattle and consumers, it is therefore important to avoid meat-rich products in the side streams. In practice, strict legal standards are imposed here. In order to comply with this, the present invention imposes a maximum meat content in each organic side stream of a maximum of 0.001 wt%, preferably a maximum of 0.0005 wt%, preferably a maximum of 0.00025 wt%, more preferably a maximum of 0.0001 wt%, even more preferably a maximum of 0.00005 wt% and even more preferably a maximum of 0.00001 wt%, and most preferably equal to 0%. It goes without saying that preferably there should be absolutely no meat present. The above presences are more focused on possible cross-contamination, trace amounts and the like, which may still be present undesirably, and are within an acceptable tolerance. Nevertheless, the aim is to keep this as low as possible, or to get it to absolutely 0.

In a preferred embodiment, in a second step of the method the said organic side streams are reduced, thereby obtaining reduced organic side streams. Such reduction is a first step in obtaining a homogeneous ration. Such reduction also prevents damage and wear to equipment, specifically the rotary dryer. The reduction of the side streams, also called comminution, is a very crucial factor. One of the most important aspects when drying side streams is reducing the particle size of the side streams. This process is crucial for the successful drying of side streams and therefore involves reducing particle size to achieve more uniform drying. By reducing the particle size, the total surface area is increased, making the drying process more efficient and reducing drying time. Another important advantage of comminution is the improved dosability of the individual types of side streams. By reducing the particle size, the dosing becomes more accurate and the correct amount of side stream can be added to the final ration. This is important because it will affect the quality and nutritional value of the final ration. Further, comminution contributes to the homogeneity and miscibility of the side streams. By reducing the particle size, the side streams are distributed more evenly and any lumps are prevented. Another important advantage of comminution is the protection of the proteins and fats in the side streams. Proteins and fats are susceptible to damage during the drying process, which can lead to a decrease in the nutritional value and quality of the ration. By reducing the particle size, the particles dry faster, the moisture is extracted more quickly, thus reducing the exposure time and thus reducing the exposure of the proteins and fats to heat and air, thus better preserving their quality and nutritional value. Finally, comminution contributes to the safety of the drying process. At larger particle sizes, hotspots can develop during drying, which can lead to combustion or even fire. By reducing the particle size, the heat is distributed more evenly and the chance of hotspots is reduced, making the drying process safer.

According to a further preferred embodiment, the reduced organic side streams have a homogeneous particle size of at least 0.2 cm, preferably at least 0.3 cm, preferably at least 0.4 cm, preferably at least 0.5 cm, preferably at least 0.6 cm, preferably at least 0.7 cm, preferably at least 0.8 cm, preferably at least 0.9 cm, preferably at least 1.0 cm, preferably at least 2.0 cm, preferably at least 3.0 cm, preferably at least 4.0 cm, preferably at least 5.0 cm, preferably at least 6.0 cm, preferably at least 7.0 cm, preferably at least 8.0 cm, preferably at least 9.0 cm.

According to a further preferred embodiment, the reduced organic side streams have a homogeneous particle size of up to 50 cm, preferably up to 45 cm, preferably up to 40 cm, preferably up to 35 cm, preferably up to 30 cm, preferably up to 25 cm, preferably up to 20 cm, preferably up to 15 cm, preferably up to 10 cm, preferably up to 9 cm, preferably up to 8 cm, preferably up to 7 cm, preferably up to 6 cm, preferably up to 5 cm.

According to a further and/or alternative preferred [embodiment], the method comprises reducing at least one of the plurality of organic side streams, wherein these organic side streams to be reduced have an average particle size larger than the predetermined particle size limit value. The average particle size of the different organic side streams can be determined by various techniques known in the art. Preferably, the average particle size is determined on the basis of a sample. According to an embodiment, the average particle size is determined on the basis of the equivalent spherical diameter. According to another embodiment, the average particle size is determined based on laser diffraction. The choice of the technique for determining the average particle size depends, among other things, on the particle size of a side stream, or the irregularity with which particles occur in a side stream. Other techniques known in the art are, for example, sieving and dynamic light scattering.

According to a preferred embodiment, the reduction of the organic side streams is carried out by one or more of breaking, cutting, chopping or shredding. Combinations of the above are also possible. Various devices known in the art can be used for this purpose. Examples include a roll crusher, an impact mill, a rotating drum equipped with pins or combs, etc.

In a third step, the supplied organic side streams are mixed and dried to obtain a ration. Drying and mixing is preferably carried out in a rotary drum dryer and a belt dryer.

According to a preferred embodiment, mixing and drying is first carried out in a rotary drum dryer. The drying and mixing process of the rotary drum dryer starts with loading the supplied organic side streams into the drum. The drum starts to rotate and at the same time warm air is introduced into the drum. Warm air circulates through the drum and comes into contact with the supplied organic side streams, thereby reducing humidity. At the end of the drum there is an exhaust opening through which the used air and removed moisture can be discharged. Preferably, the air is then passed through a filter, where the moisture is removed. Rotary drum dryers are available in different sizes and models depending on the application and can be customized with various options, such as heating elements, fans and exhaust ports, to meet specific drying needs. It is an effective and widely used technique for drying side streams. Advantages of such drying include higher energy efficiency compared to direct drying techniques, minimal energy loss from a gas outlet, the possibility of reusing residual heat obtained from, for example, a gas stream originating from a production process, a minimal required gas cleaning of organic waste materials formed during drying, possible use of toxic or active substances as a heating medium, possible operation under a modified atmosphere, as well as a reduced risk of ignition of a stream to be dried.

Drying is preferably done in the rotary drum dryer by heat exchange with a flow of heating medium. The heating medium may refer to air, water or steam, oil, or a molten salt. The heating medium may also refer to residual gas obtained from, for example, a production process, a cooling process, a combustion process, etc. Heating media are often characterized by one or more of the following features: a high thermal conductivity; a high viscosity; a high density, in particular in a high temperature range; high flash point; non-toxic; non-explosive; low environmental impact, i.e., easy degradation and clean-up in the event of a leak, for example; easy to replace; etc. Preferably, a first heating medium is air, a second heating medium may refer to any of the above media. Preferably, a second heating medium is a residual gas.

Preferably, the drying and mixing of the supplied side streams in the rotary drum dryer takes place in a continuous manner, i.e., in which the supplied organic side streams are supplied continuously. Such a circuit can be understood as a substantially closed circuit. Alternatively, the drying and mixing of the supplied side streams in the rotary drum dryer can also be done in a discontinuous manner, i.e., in batches.

Preferably, the method comprises indirectly drying and mixing the supplied side streams in the rotary drum dryer for a residence time of at least 10 minutes to obtain the homogeneous ration, more preferably a residence time of at least 5 minutes, even more preferably a residence time of at least 6 minutes, even more preferably a residence time of at least 7 minutes, even more preferably a residence time of at least 8 minutes, even more preferably a residence time of at least 9 minutes, according to a preferred embodiment for a residence time of at least 15 minutes. The inventors note that such minimum residence times prevent heat shock in a product to be dried, thereby preventing carbonization of the product to be dried. Carbonization has a detrimental effect on the quality as well as the nutritional value of the product to be dried.

Preferably, the method comprises indirectly drying and mixing the supplied side streams in the rotary drum dryer to obtain the homogeneous ration at a final temperature of at least 50°C, more preferably a final temperature of at least 55°C, even more preferably a final temperature of at least 60°C, even more preferably a final temperature of at least 65°C, even more preferably a final temperature of at least 70°C, even more preferably a final temperature of at least 75°C and most preferably at least 85°C. Such a minimum final temperature is required to ensure sufficient mixing, especially mixing of products with a high melting temperature. Moreover, such a minimum temperature is required to obtain a homogeneous ration with a sufficiently low bacterial count. Such a bacterial count is necessary for good microbiological stability of the product obtained when this product is to be used as feed, for example.

According to a further and/or alternative preferred embodiment, one of the plurality of organic side streams has a bacterial count of at least 100,000 cfu/g, more preferably a bacterial count of at least 110,000 cfu/g, even more preferably a bacterial count of at least 120,000 cfu/g, even more preferably a bacterial count of at least 130,000 cfu/g, even more preferably a bacterial count of at least 140,000 cfu/g and most preferably 150,000 cfu/g. Such high bacterial counts are associated with residual streams, for example from the food industry or the feed industry. Such high bacterial counts result in low microbial stability of a product and are therefore not suitable for use as food or feed. Consequently, this bacterial count must be reduced.

According to a further and/or alternative preferred embodiment, the obtained homogeneous ration has a bacterial count of at most 50 cfu/g, more preferably at most 48 cfu/g, even more preferably at most 46 cfu/g, even more preferably at most 44 cfu/g, even more preferably at most 42 cfu/g, even more preferably at most 40 cfu/g, even more preferably at most 38 cfu/g, even more preferably at most 36 cfu/g, even more preferably at most 34 cfu/g, even more preferably at most 32 cfu/g, even more preferably at most 30 cfu/g, even more preferably at most 28 cfu/g, even more preferably at most 26 cfu/g, even more preferably at most 24 cfu/g, even more preferably at most 22 cfu/g, even more preferably at most 20 cfu/g, even more preferably at most 18 cfu/g, even more preferably at most 16 cfu/g, even more preferably at most 14 cfu/g, even more preferably at most 12 cfu/g, most preferably at most 10 cfu/g. Such low bacterial counts result in a high microbiological stability of an obtained homogeneous ration. Consequently, such a homogeneous ration is very suitable for use as food and/or feed for cattle.

"Bacterial count," as used herein, refers to a term known in the art, which designates a number of colony forming units (CFU) or bacterial germs located on a product. The bacterial count can be determined by placing a small amount of the product to be tested on a Petri dish with a selective culture medium and placing it at certain temperatures, depending on the expected type of bacteria. After a few days, the colonies formed are counted. Every living bacterial germ has then formed a colony. If there are many bacteria present, it is necessary to first make a dilution series. For this purpose, the sample is diluted with a physiological saline solution. A countable quantity can then be created using a dilution series.

According to a preferred embodiment, the rotary drum dryer has an air inlet temperature of at least 150°C, preferably at least 160°C, preferably at least 170°C, preferably at least 180°C, preferably at least 190°C, preferably at least 200°C.

According to a preferred embodiment, the rotary drum dryer has an air inlet temperature of maximum 400°C, preferably maximum 390°C, preferably maximum 380°C, preferably maximum 370°C, preferably maximum 360°C, preferably maximum 350°C, preferably maximum 340°C, preferably maximum 330°C, preferably maximum 320°C, preferably maximum 310°C, preferably maximum 300°C.

According to a further preferred embodiment, the rotary drum dryer has an inlet temperature between a minimum of 150°C and a maximum of 400°C and in particular between a minimum of 150°C and a maximum of 350°C. The proposed optimum air inlet temperature aims to optimize the efficiency of the drying process and improve the quality of the final product. A higher inlet air temperature can result in faster product drying and shorter residence time in the dryer, which can increase product throughput and reduce overall process costs. Additionally, higher temperatures may make it easier to dry certain types of products that have a higher moisture content. On the other hand, too high an inlet air temperature can also have adverse effects on the quality of the final product, such as loss of nutrients, flavor, color and texture, and can lead to excessive heat load on the dryer and wear and tear on the equipment. Therefore, the proposed optimum inlet temperature can provide a good balance between achieving high drying efficiency and maintaining the quality of the final product and equipment.

According to a preferred embodiment, drying takes place at an oxygen concentration of at most 20 wt%, more preferably at most 19 wt%, even more preferably at most 18 wt%, even more preferably at most 17 wt%, even more preferably at most 16 wt%, even more preferably at most 15 wt%, even more preferably at most 14 wt%, even more preferably at most 13 wt% and most preferably at most 12 wt%. Such a reduced oxygen concentration has the advantage of preventing ignition of the product to be dried. Such a modified atmosphere during drying is only possible with indirect drying.

According to a preferred embodiment, the rotary drum dryer is provided with a gas outlet connected to an integrated afterburner for cleaning organic waste materials formed during drying. Preferably, an air extraction system is provided on the rotary drum dryer. Preferably, the rotary drum dryer is equipped with a gas outlet. Preferably, the gas outlet is integrated into the air extraction system of the rotary drum dryer. More preferably, the gas outlet is connected to an integrated afterburner for gas cleaning of waste materials formed during drying, in particular organic waste materials formed, such as volatile organic compounds (VOCs).

VOCs is the collective name for a group of substances that evaporate easily, in particular those that have a vapor pressure greater than 0.01 kPa at 20°C. Propylene glycol is the starting point here, with a vapor pressure of 0.013 kPa at 20°C. In particular, VOCs have a retention time smaller than that of tetradecane (C₁₄H₃₀). Volatile organic compounds are broken down in the atmosphere under the influence of UV radiation and, among other things, OH radicals. Under certain circumstances, these conversions lead to the formation of ozone, which has a harmful effect on health (but also on plant growth, for example) and has an effect on global warming higher up in the atmosphere. Since 2007, the amount of volatile organic compounds in paint has been restricted in the European Union. The emission of volatile organic compounds from motor vehicles has been regulated for some time. Agreements have also been made in the European Union regarding the emission of these substances from the chemical industry and from gas stations. Such VOCs are released during the drying process.

According to a preferred embodiment, the drying is continued in a belt dryer. The belt dryer process starts with loading the supplied organic side streams onto the belt. The belt then moves through the heating sections, where the supplied organic side streams are exposed to heating. This reduces the moisture of the product and improves its quality. Heating can be provided by different types of heat sources, such as electric heating elements, steam nozzles or heat exchangers. The belt is often constructed of a heat resistant material, such as stainless steel, and is designed to firmly support the products as they move through the heating sections. Belt dryers are available in different sizes and models depending on the application and can be customized with various options, such as heating elements, fans and exhaust ports, to meet specific drying needs.

According to a preferred embodiment, the drying of the organic side streams takes place further in the belt dryer for a residence time of at least 35 minutes, preferably at least 40 minutes, preferably at least 45 minutes, preferably at least 50 minutes, preferably at least 60 minutes, preferably at least 70 minutes, preferably at least 80 minutes, preferably at least 90 minutes, preferably at least 100 minutes, preferably at least 150 minutes. The inventors note that such minimum residence times prevent heat shock in a product to be dried, thereby preventing carbonization of the product to be dried. Carbonization has a detrimental effect on the quality as well as the nutritional value of the product to be dried.

According to a preferred embodiment, the belt dryer has an air temperature of at least 35°C, preferably at least 40°C, preferably at least 45°C, preferably at least 50°C.

According to a preferred embodiment, the belt dryer has an air temperature of maximum 95°C, preferably maximum 90°C, preferably maximum 85°C, preferably maximum 80°C, preferably maximum 75°C, preferably maximum 70°C. Higher air temperature can help to reduce the moisture content of the material passing through the belt dryer more quickly, which can shorten drying time and increase production efficiency.

According to a further preferred embodiment, the belt dryer has an air temperature between at least 35°C and at most 95°C and in particular between at least 40°C and at most 90°C. Such air temperature is required to ensure sufficient drying. Using the suggested optimum air temperature can help maintain the quality of the final product by minimizing the degradation process of the material. By optimizing the air temperature in the belt dryer, energy can be saved because the drying time can be shortened and the drying efficiency can be increased. Finally, having a belt dryer with a wide range of air temperature options can help adapt the machine to different types of materials being processed by the belt dryer and the specific drying needs they have.

According to a preferred embodiment, the belt dryer has an energy supply, which energy supply uses residual heat from the rotary drum dryer. By using the residual heat, less energy needs to be consumed during the drying process, resulting in lower energy costs and less CO₂ emissions. Furthermore, the use of the residual heat from the rotary drum dryer allows the belt dryer to operate more efficiently and to ensure a constant and even temperature. This allows the drying process to be carried out faster, resulting in higher productivity and less product loss. The sustainability of the drying process is also increased, as it reduces the amount of energy required to carry out the drying process. This reduces greenhouse gas emissions and decreases dependence on fossil fuels. Finally, side stream processing companies can save costs in this way on the purchase of additional fuel or energy.

According to a preferred embodiment, in a fourth step of the method the reduced organic side streams are dosed, wherein the dosing is suitable for supplying organic side streams in order to obtain a homogeneous ration as an end product with a predetermined starch content and a protein content. The dosing of reduced organic side streams is important when composing a homogeneous ration for cattle with the specified starch content and a protein content. A well-balanced ration helps to improve the health and productivity of cattle, while an unbalanced ration can lead to problems such as digestive problems, reduced milk production and poorer overall health. It is therefore important to dose the organic side streams in a controlled manner to prevent the cattle from ingesting too much or too little of certain nutrients. By obtaining a homogeneous ration with a predetermined starch and protein content, an optimal diet can be composed for the cattle, which contributes to their health and productivity. A homogeneous mixture is not only safer for the cattle and reduces the chance of production errors, but also for the equipment used to produce the ration. If the organic side streams are not properly reduced and dosed, this can lead to blockages and damage to the equipment used. This can result in equipment downtime, unplanned repairs and increased maintenance costs. By evenly reducing and correctly dosing the organic side flows, the chance of blockages in the equipment is reduced and wear and damage to the equipment is prevented. In addition, a homogeneous mixture ensures a more even load on the equipment, which can extend the life of the equipment.

According to a preferred embodiment, the dosing of the reduced organic side streams takes place in a rotary drum dryer at a supply temperature between a minimum of 1°C and a maximum of 40°C.

Preferably, the supply temperature is at least 1°C, preferably at least 2°C, preferably at least 3°C, preferably at least 4°C, preferably at least 5°C, preferably at least 6°C, preferably at least 7°C, preferably at least 8°C, preferably at least 9°C, preferably at least 10°C, preferably at least 11°C, preferably at least 12°C, preferably at least 13°C, preferably at least 14°C, preferably at least 15°C, preferably at least 16°C, preferably at least 17°C, preferably at least 18°C, preferably at least 19°C, preferably at least 20°C.

Preferably, the supply temperature is a maximum of 40°C, preferably a maximum of 39°C, preferably a maximum of 38°C, preferably a maximum of 37°C, preferably a maximum of 36°C, preferably a maximum of 35°C, preferably a maximum of 34°C, preferably a maximum of 33°C, preferably a maximum of 32°C, preferably a maximum of 31°C, preferably a maximum of 30°C, preferably a maximum of 29°C, preferably a maximum of 28°C, preferably a maximum of 27°C, preferably a maximum of 26°C, preferably a maximum of 25°C.

More preferably, the method comprises dosing the reduced and other organic side streams into a rotary drum dryer at a supply temperature between 1 and 40°C, more preferably between 3 and 39°C, even more preferably between 5 and 38°C, even more preferably between 7 and 37°C, even more preferably between 9 and 36°C, even more preferably between 10 and 35°C, even more preferably between 11 and 34°C, even more preferably between 12 and 33°C, even more preferably between 13 and 32°C, even more preferably between 14 and 31°C, even more preferably between 15 and 30°C, even more preferably between 16 and 29°C, even more preferably between 17 and 28°C, even more preferably between 18 and 27°C, even more preferably between 19 and 26°C, most preferably between 20 and 25°C.

In a preferred embodiment, the [ration] for methane reduction in cattle has a fat content of at least 10 wt%, a starch content of at least 40 wt%, a protein content of at least 10 wt%, a sugar content of at least 12 wt%, and a crude fiber content of at least 3 wt%. Preferably, the [ration] for methane reduction in cattle has a fat content of at least 10.8 wt%, a starch content of at least 40 wt%, a protein content of at least 10.5 wt%, a sugar content of at least 12 wt% and a crude fiber content of at least 3.2 wt%.

In a preferred embodiment, the ration has a fat content of at least 10 wt%, preferably at least 10.2 wt%, preferably at least 10.4 wt%, preferably at least 10.6 wt%, preferably at least 10.8 wt%, preferably at least 11 wt%, preferably at least 12 wt%, preferably at least 13 wt%, preferably at least 14 wt%, preferably at least 15 wt%, preferably at least 20 wt%, preferably at least 25 wt%, preferably at least 30 wt%. This fat content in the cattle feed will have a methane-reducing effect at rumen level. This phenomenon can be explained by several mechanisms occurring in the animal's rumen. First, fat has the potential to influence the activity of methane-producing microorganisms in the rumen. It can inhibit the growth of certain bacteria responsible for methane production. By reducing the population and activity of these bacteria, the fat content of the feed can reduce methane production. In addition, a high-fat diet can lead to increased production of volatile fatty acids in the rumen. These fatty acids are important nutrients for ruminants and can serve as alternative energy sources. By increasing the availability of volatile fatty acids, the fat content of the diet can improve the efficiency of rumen fermentation, resulting in lower methane production. In addition, the fat content of the feed can influence feed intake and digestive efficiency. High-fat feed can increase satiety in cattle, causing them to consume less feed. In addition, fat can slow the rate of digestion of other nutrients, giving cattle more time to utilize these nutrients more efficiently. Improved feed intake and nutrient utilization will lead to a reduction in methane production at rumen level.

In a preferred embodiment, the ration has a starch content of at least 40 wt%, preferably at least 35 wt%, preferably at least 41 wt%, preferably at least 42 wt%, preferably at least 43 wt%, preferably at least 44 wt%, preferably at least 45 wt%, preferably at least 50 wt%, preferably at least 55 wt%, preferably at least 60 wt%, preferably at least 65 wt%, preferably at least 70 wt%. This starch content in the cattle ration will also have a methane-reducing effect at rumen level. This effect is caused by several mechanisms that take place in the animal's rumen. First, starch-rich feed may affect rumen fermentation by altering the activity of methane-producing microorganisms. The starch is broken down into volatile fatty acids, such as propionate and butyric acid, which inhibit the growth of methane-producing bacteria. By reducing the activity of these bacteria, the starch content in the feed will reduce methane production. In addition, starch can be converted into lactic acid during fermentation in the rumen. The lactic acid lowers the pH value in the rumen, which in turn inhibits the growth of methane-producing bacteria. By increasing lactic acid levels, the starch content of the feed can reduce methane production at the rumen level. In addition, starch-rich feed can improve feed intake and digestive efficiency in cattle. The higher energy density and palatability of starch-rich feed encourage animals to consume more feed. In addition, more efficient digestion of starch may lead to better nutrient utilization, leaving less undigested materials available for methane-producing bacteria in the rumen.

In a preferred embodiment, the ration has a protein content of at least 10 wt%, preferably at least 10.5 wt%, preferably at least 11 wt%, preferably at least 11.5 wt%, preferably at least 12 wt%, preferably at least 12.5 wt%, preferably at least 13 wt%, preferably at least 13.5 wt%, preferably at least 14 wt%, preferably at least 14.5 wt%, preferably at least 15 wt%, preferably at least 20 wt%, preferably at least 25 wt%.

In a preferred embodiment, the ration has a sugar content of at least 12 wt%, preferably at least 13 wt%, preferably at least 14 wt%, preferably at least 15 wt%, preferably at least 20 wt%, preferably at least 25 wt%, preferably at least 30 wt%. This sugar content in the cattle ration will also have a methane-reducing effect at rumen level. This effect is caused by several mechanisms that take place in the animal's rumen. Sugar-rich feeds contribute to a better fermentation balance in the rumen. They provide the rumen microbes with readily available energy sources, allowing them to work more efficiently. This results in improved digestion of nutrients and a reduction of undigested residues in the rumen. Less undigested residues means less substrate is available for methane producing bacteria, reducing methane production. In addition, sugar is quickly broken down into volatile fatty acids in the rumen. These volatile fatty acids, such as propionate, are efficiently used by cattle as an energy source. At the same time, these volatile fatty acids inhibit the growth of methane-producing bacteria. Increasing the sugar content reduces methane production by inhibiting the growth of methane producing bacteria. In addition, sugar-rich feed generally has a higher palatability, which means cattle consume more feed. Higher feed intake can lead to improved digestion and nutrient utilization, leaving less undigested material available to the methane-producing bacteria in the rumen.

Increasing the fat, starch and sugar content in cattle rations will therefore lead to a reduction in methane emissions. The researchers found that when the proposed weight percentages are used, a methane reduction of at least 7% occurs compared to the conventional cattle rations, preferably a methane reduction of at least 8%, preferably at least 9%, preferably at least 10%, preferably at least 11%, preferably at least 12%, preferably at least 13%, preferably at least 14%, preferably at least 15%, preferably at least 16%, preferably at least 17%, preferably at least 18%, preferably at least 19%, preferably at least 20%, preferably at least 25%, preferably at least 30%. Methane is a byproduct of the digestion of ruminants, such as cattle, and is emitted through burps and flatulence. Methane has a potentially damaging effect on the climate, as it is a greenhouse gas that contributes to global warming. Increasing the fat, starch and sugar content of the ration is an effective way to reduce methane emissions, as this will contribute to better digestion of the feed by the rumen microbes in the cattle stomach, resulting in less undigested feed residues that can contribute to methane formation. However, increasing fat, starch and sugar content can also lead to other problems, such as weight gain and digestive problems. Therefore, predetermined weight percentages are optimal to carefully balance the ration.

In a preferred embodiment, the ration has a crude fiber content of at least 3 wt%, preferably at least 3.2 wt%, preferably at least 3.4 wt%, preferably at least 3.6 wt%, preferably at least 3.8 wt%, preferably at least 4 wt%, preferably at least 4.5 wt%, preferably at least 5 wt%, preferably at least 6 wt%, preferably at least 7 wt%, preferably at least 8 wt%, preferably at least 9 wt%, preferably at least 10 wt%. Crude fiber content, also known as crude fiber, is a measure of the level of indigestible dietary fiber in animal feed or food. It includes the indigestible plant cell walls and other structural components of foods that are not broken down during digestion. The crude fiber content is usually determined by the amount of residue left after treating the sample with acid and alkali. The crude fiber content is often used in feed analyses to assess the fiber quality and digestibility of the feed. It provides an indication of the amount of fiber available for digestion and can help determine the nutritional potential of the feed for animals. The crude fiber content is expressed as a percentage of the dry weight of the sample. It is important to note that crude fiber content does not measure all types of fiber, such as soluble fiber, but it focuses primarily on the insoluble fibers that are less easily digested.

Crude fibers play an important role in cattle feed and have various functions that contribute to the health and welfare of the animals. First, crude fiber is essential for healthy digestion and intestinal health in cattle. They act as "roughage," helping food move smoothly through the digestive system. In addition, they stimulate chewing movements and saliva production, which contributes to effective digestion. In addition, crude fibers play an important role in the development of healthy rumen fermentation, where microorganisms ferment the fibers and produce nutrients that can be absorbed by the animal. Another advantage of crude fiber is that it provides satiety in cattle. It provides a feeling of fullness, which prevents excessive feed intake and keeps the animals' body weight in balance. In addition, fiber contributes to a balanced diet by providing additional nutrients. Crude fiber also affects cattle feces. It promotes healthy bowel function and helps maintain regular bowel movements. By preventing constipation and diarrhea, fiber contributes to the general well-being of the animals.

According to a preferred embodiment, the ration has a dry matter content of at least 70 wt%, preferably at least 75 wt%, preferably at least 80 wt%, preferably at least 81 wt%, preferably at least 82 wt%, preferably at least 83 wt%, preferably at least 84 wt%, preferably at least 85 wt%, preferably at least 86 wt%, preferably at least 87 wt%, preferably at least 88 wt%, preferably at least 89 wt%, preferably at least 90 wt%, preferably at least 91 wt%, preferably at least 92 wt%, preferably at least 93 wt%, preferably at least 94 wt%, preferably at least 95 wt%. A high dry matter content is important in a cattle ration because it affects the nutritional value and digestibility of the feed. When the dry matter content of the ration is high, it means that there are more nutrients per unit of weight in the ration. This has several advantages, cattle have limited capacity in their stomach and intestines, so feeding a ration with a high dry matter content can ensure they get more nutrients without their stomachs becoming too full. In addition, a high dry matter content will increase the digestibility of the feed, because there is less water in the feed that can dilute the bacteria in the stomach and intestines. It will also improve the consistency of the ration, making it easier to mix and process the feed. A higher dry matter content will also mean that the ration has a longer shelf life, because there is less moisture present in which bacteria and fungi can grow. It is therefore important to have a ration for cattle with a high dry matter content to ensure that the cattle receive sufficient nutrients and can make optimal use of the feed.

In a preferred embodiment, the ration has a particle size of maximum 50 mm, preferably maximum 45 mm, preferably maximum 40 mm, preferably maximum 35 mm, preferably maximum 30 mm, preferably maximum 25 mm, preferably maximum 20 mm, preferably maximum 15 mm, preferably maximum 10 mm, preferably maximum 9 mm, preferably maximum 8 mm, preferably maximum 7 mm, preferably maximum 6 mm, preferably maximum 5 mm, preferably maximum 4 mm, preferably maximum 3 mm, preferably maximum 2 mm. The particle size of a cattle ration is important because it affects the intake, digestibility and welfare of the cattle. Feed particles that are too large can be difficult for the cattle to ingest, which means the cattle will eat less. Furthermore, particle size also influences the digestibility of the feed. Feed particles that are too large or too small can hinder the digestion of the ration. If the feed particles are too large, they cannot be digested sufficiently and can irritate the intestines. Too large a particle size can lead to rumen acidosis or other digestive problems. This can lead to decreased appetite, reduced growth and even illness. If the particles are too small, digestion in the rumen can be disturbed. The researchers found that the predetermined particle size is ideal to ensure the health of the cattle.

According to a preferred embodiment, the ration has a density of at least 400 kg/m³, preferably at least 450 kg/m³, preferably at least 500 kg/m³, preferably at least 550 kg/m³, preferably at least 560 kg/m³, preferably at least 570 kg/m³, preferably at least 580 kg/m³, preferably at least 590 kg/m³, preferably at least 600 kg/m³, preferably at least 610 kg/m³, preferably at least 620 kg/m³, preferably at least 630 kg/m³, preferably at least 640 kg/m³, preferably at least 650 kg/m³.

According to a preferred embodiment, the ration has a density of at most 900 kg/m³, preferably at most 850 kg/m³, preferably at most 800 kg/m³, preferably at most 750 kg/m³, preferably at most 740 kg/m³, preferably at most 730 kg/m³, preferably at most 720 kg/m³, preferably at most 710 kg/m³, preferably at most 700 kg/m³, preferably at most 690 kg/m³, preferably at most 680 kg/m³, preferably at most 670 kg/m³, preferably at most 660 kg/m³.

According to a preferred embodiment, the ration has a density between a minimum of 400 kg/m³ and a maximum of 900 kg/m³, preferably between a minimum of 450 kg/m³ and a maximum of 850 kg/m³, and in particular between a minimum of 500 kg/m³and a maximum of 800 kg/m³. The density of a cattle ration is important because it affects the amount of nutrients the cattle consume and the extent to which the cattle are able to digest the ration. The density of the ration influences the nutritional value of the ration in the sense that a higher density means more nutrients are available per unit of feed. This contributes to better growth, production and health of the cattle. Furthermore, too high or too low a density can lead to reduced feed intake. If the density of the ration is too high, the cattle may have difficulty chewing and swallowing the ration. If the density of the ration is too low, the cattle will not receive sufficient nutrients. The density of the ration will also further influence the health of the cattle's rumen. Too high a density can lead to rumen overload, which can lead to rumen acidosis. Too low a density will lead to insufficient stimulation of rumen activity, which can lead to poor digestion and reduced feed intake. It is important to maintain this optimal ration density to ensure that the cattle receive sufficient nutrients.

In what follows, the invention will be described by way of non-limiting examples illustrating the invention, and which are not intended to and should not be interpreted as limiting the scope of the invention.

### EXAMPLES

The invention will now be further explained on the basis of the following example, without however being limited to this.

### EXAMPLE 1

Example 1 relates to an embodiment of the present invention.

The organic side streams to be dried according to the present invention concern residues from the food industry. In particular, these residues concern:
i. a first type of organic side stream: potato product residues with an average particle size of 1 cm;
ii. a second type of organic side stream: residues from dough-based products with an average particle size of 2 cm, biscuit residues with a particle size varying between 0.5 and 40 cm and animal product residues with an average particle size varying between 0.5 and 20 cm;
iii. In addition to the fat and starch-rich side streams, components of other side streams will also be present, such as side streams with a sugar content of at least 12 wt%, side streams comprising crude fibers and side streams with a protein content of at least 10.5 wt%. The sugar content can come from added sugars in various products, while the crude fiber can come mainly from whole grains, vegetables or fruits. The protein content may vary depending on the presence of protein-containing ingredients such as eggs, milk or meat products.

The side streams with an average particle size of more than 1 cm were reduced separately by means of various techniques, such as breaking, cutting, chopping or shredding.

After reducing the various side streams were dosed into a rotary drum dryer at 22°C. The various dosed side streams mainly comprise residues from dough-based products, biscuits, pastas and potato products. In this rotary drum dryer, the side streams were dried and mixed for a residence time of approximately 18 minutes, to obtain a homogeneous end product at approximately 75°C with 10 cfu/g.

Operational parameters of the rotary dryer are as follows:
- first heating medium: air at 240°C;
- second heating medium: exhaust gases from an incineration plant at approximately 800°C;
- diameter: 3.0 m;
- rotation speed: 5-8 rotations/min;
- about 11 wt% oxygen; and
- integrated afterburner.

After drying and dosing, it was determined that the resulting ration, consisting of side streams from dough-based products, biscuits/cookies, pasta, and potato products from large food companies, has a remarkably low COz footprint. For each kilogram of this ration, the CO₂ footprint amounts to only 0.134 kg CO₂ equivalents, which is no less than 6 times lower than that of traditional animal feed ingredients. This demonstrates the sustainable and environmentally friendly approach to using these side streams in the livestock sector.

The present invention should not be construed as being limited to the embodiments described above and certain modifications or changes may be added to the examples described without having to re-evaluate the appended claims.

### EXAMPLE 2

Example 2 concerns a method for producing the methane-reducing ration for cattle. First of all, at least two types of organic side streams are provided, each with a meat content of no more than 0.001 weight percent. The first type of organic side stream consists of starch-rich by-products with a starch content of at least 40 percent by weight. The second type of organic side stream contains fat-rich by-products with a fat content of at least 10 percent by weight. Subsequently, the organic side streams are reduced in size by means of breaking, cutting, chopping or shredding, so that the resulting reduced organic side streams have a homogeneous particle size of at least 0.5 cm and at most 10 cm. After this, one or more of the reduced organic side streams are dried in a rotary drum dryer and/or a belt dryer. Drying in the rotary drum dryer takes place for a residence time of at least 10 minutes. Finally, the reduced organic side streams are thoroughly mixed and dosed to obtain a homogeneous feed product. The resulting ration has a fat content of at least 10 wt% and a starch content of at least 40 wt%.

The obtained homogeneous feed product, i.e., the ration produced has the following composition:
- Moisture: 7.5 wt%;
- Crude protein: 10.5 wt%;
- Crude fat: 20.8 wt%;
- Crude fiber: 3.2 wt%;
- Ash: 2.5 wt%;
- Starch: 40 wt%; and
- Sugars: 12 wt%.

This method produces a methane-reducing ration for cattle, which will contribute to reducing methane emissions in livestock farming.

## Claims

1. Method for producing a ration for methane reduction in cattle, comprising:
a. providing at least a first type of organic side stream and a second type of organic side stream, wherein each organic side stream has a meat content of at most 0.001 wt%, preferably of at most 0.0001 wt%, more preferably at most 0.00001 wt%, and wherein:
i. the first type of organic side stream comprises starch-rich by-products, wherein the first type of organic side stream comprises a starch content of at least 40 wt%;
ii. the second type of organic side stream includes fat-rich by-products, wherein the second type of organic by-flow has a fat content of at least 10 wt%;
b. the reduction of said organic side streams, thereby obtaining reduced organic side streams, wherein the reduced organic side streams have a homogeneous particle size of at least 0.5 cm and at most 10 cm;
c. the drying of one or more of the reduced organic side streams, wherein said drying takes place in a rotary drum dryer and/or a belt dryer, wherein the drying of the reduced organic side streams takes place in the rotary drum dryer for a residence time of at least 10 minutes;
d. mixing and dosing the reduced organic side streams, thereby obtaining a homogeneous feed product with a fat content of at least 10 wt% and a starch content of at least 40 wt%.

2. The method according to claim 1, **characterized in that** the reducing of the organic side streams is done by one or more of breaking, cutting, chopping, or shredding.

3. The method according to any of the preceding claims 1 or 2, **characterized in that** the dosing takes place in the rotary drum dryer of the reduced organic side streams at a supply temperature between a minimum of 1°C and a maximum of 40°C.

4. The method according to any of the preceding claims 1 to 3, **characterized in that** the rotary drum dryer has an inlet temperature of air between a minimum of 150°C and a maximum of 350°C.

5. The method according to any of the preceding claims 1 to 4, **characterized in that** the drying in the rotary drum dryer takes place at an oxygen concentration of at most 15 wt%.

6. The method according to any of the preceding claims 1 to 5, **characterized in that** the rotary drum dryer is provided with a gas outlet connected to an integrated afterburner for cleaning organic waste materials formed during drying.

7. The method according to any of the preceding claims 1 to 6, **characterized in that** the drying of the organic side streams continues in the belt dryer for a residence time of at least 40 minutes.

8. The method according to any of the preceding claims 1 to 7, **characterized in that** the belt dryer has an air temperature ranging between a minimum of 40°C and a maximum of 90°C.

9. The method according to any of the preceding claims 1 to 8, **characterized in that** the belt dryer has an energy supply, which energy supply uses residual heat from the rotary drum dryer.

10. Ration for methane reduction in cattle, **characterized in that** the ration has a fat content of at least 10 wt%, a starch content of at least 40 wt%, a protein content of at least 10 wt%, a sugar content of at least 12 wt% and a crude fiber content of at least 3 wt%.

11. The ration according to any of claims 10 or 11, **characterized in that** the ration has a dry matter content of at least 85 wt%.

12. The ration according to any of claims 10 to 11, **characterized in that** the ration has a particle size of maximum 10 mm.

13. The ration according to any of claims 10 to 12, **characterized in that** the ration has a density between at least 500 kg/m³ and at most 800 kg/m³.

14. The ration according to any of claims 10 to 13, **characterized in that** the ration is produced by a method according to claims 1 to 9.

15. Use of the ration according to any of claims 10 to 14 or the method according to any of claims 1 to 9 as a methane-reducing ration for cattle.
